# EUROPÄISCHE PATENTSCHRIFT

(11) **EP 0 733 847 B1**
(45) Veröffentlichungstag und Bekanntmachung des Hinweises auf die Patenterteilung: **19.08.1998**
(21) Anmeldenummer: 96103829.6
(22) Anmeldetag: 12.03.1996
(51) Int. Cl.: F16L 47/00, B29C 37/00

(54) **Übergangsstück für Rohrleitungen**
Transition piece for pipelines
Pièce intermédiaire pour tuyaux

(30) Priorität: 24.03.1995 DE 19510714
(43) Veröffentlichungstag der Anmeldung: 25.09.1996
(73) Patentinhaber: Friatec Aktiengesellschaft, 68229 Mannheim (DE)
(72) Erfinder: Bläss, Jürgen, 69493 Hirschberg-Leutershausen (DE)
(74) Vertreter: Klose, Hans, Dipl.-Phys.

(56) Entgegenhaltungen:
- EP-A- 0 066 704
- EP-A- 0 531 709
- AT-B- 397 843
- GB-A- 2 019 769

## Beschreibung

Die Erfindung bezieht sich auf ein Übergangsstück für Rohrleitungen gemäß den im Oberbegriff des Patentanspruchs 1 angegebenen Merkmalen.

Aus der EP-B-531 709 ist ein derartiges Übergangsstück bekannt, welches insbesondere für die Verbindung von Kunststoffrohren und Metallrohren dient. Das Übergangsstück enthält ein Kunststoffteil und einen Einsatzkörper mit einem Gewinde zum Einschrauben des Metallrohrs. Ferner enthält der Einsatz eine sich über den Außenumfang erstreckende Ringnut zur Aufnahme eines elastischen Dichtrings. Wenigstens eine Seitenwand der Ringnut ist derart geneigt angeordnet, daß der radial innenliegende Nutboden eine größere Breite als die radial außenliegende Nutöffnung aufweist. Zum Herstellen des Kunststoffteils wird der Einsatzkörper und damit auch die Ringnut mit dem Dichtring mittels Kunststoff umspritzt, wobei in der genannten Ringnut zusätzlich zu dem Dichtring ein keilförmiger Ring aus dem Kunststoff ausgebildet wird. Der Einspritzdruck wird in der Ringnut im wesentlichen zur radialen Verpressung des Dichtringes genutzt, welcher durch den genannten keilförmigen Kunststoffring auch nach dem Abkühlen des Kunststoffs vorgespannt ist und die geforderte Dichtwirkung gewährleistet. Aufgrund der sich radial nach innen erweiternden keilförmigen Ausbildung der Ringnut wirkt der erstarrte keilförmige Kunststoffring einer Entspannung und Verminderung der Dichtwirkung des Dichtringes entgegen. Da der Einsatzkörper umlaufende Kanten und Ecken aufweist, an welchen der Kunststoff des Kunststoffteils unmittelbar anliegt, können vor allem durch Kerbwirkung im Kunststoff Schäden auftreten. Eine Bearbeitung, beispielsweise ein Anfasen derartiger Ecken ist zwar grundsätzlich denkbar, doch wird hierdurch der Fertigungsaufwand nicht unerheblich vergrößert. Das Einsetzen des Dichtrings in die Ringnut erfordert einen zusätzlichen Fertigungsaufwand, wobei zudem die Gefahr einer Beschädigung des Dichtringes zu beachten ist, wodurch eine Undichtheit, möglicherweise auch erst nach einer geraumen Zeit, zu befürchten ist.

Hiervon ausgehend liegt der Erfindung die Aufgabe zugrunde, das Übergangsstück der genannten Art dahingehend weiterzubilden, daß eine hohe Funktionssicherheit bei langer Lebensdauer gewährleistet ist. Der Fertigungsaufwand soll reduziert werden und die Fertigung in hohen Stückzahlen soll problemlos und unter Vermeidung von Ausschuß erfolgen können. Das Übergangsstück soll dauerhaft den Sicherheitsanforderungen hinsichtlich Gasdichtheit und/oder Flüssigkeitsdichtheit entsprechen und aufwendige Fertigungsmethoden sollen vermieden werden.

Die lösung dieser Aufgabe erfolgt durch die Merkmale des Anspruchs 1.

Das vorgeschlagene Übergangsstück zeichnet sich durch einen einfachen Aufbau aus und besitzt eine hohe Funktionssicherheit. Die aus elastischem Material bestehende Zwischenschicht ermöglicht den Ausgleich von Schwindungen des Kunststoffes, insbesondere während des Abkühlens nach dem Spritzen, und Spannungen im Material werden somit reduziert. Als Kunststoff gelangen vorzugsweise PVC oder PVC-C oder vergleichbare Kunststoffe zum Einsatz, wobei deren besondere Materialeigenschaften vor allem im Hinblick auf die Schwindung nach dem Spritzen durch die elastische Zwischenschicht in zweckmäßiger Weise ausgeglichen werden. Im Vergleich zu dem vorbekannten Übergangsstück mit Dichtring ist in der Ringnut der eingespritzte Kunststoffring erheblich größer und die Abdichtung wird verbessert. Die Ringnut, und zwar der Nutboden und die Seitenwände sind mit der elastischen Zwischenschicht ausgekleidet, welche auch nach dem Spritzen aufgrund der keilartigen Ausbildung des Kunststoffringes unter hinreichender Vorspannung zur Gewährleistung der Dichtfunktion steht. Die elastische Zwischenschicht ist in besonders zweckmäßiger Weise als ein Schlauch aus einem Elastomer, Gummi oder vergleichbarem Werkstoff hergestellt. Dieser Schlauch wird vor dem Umspritzen des Einsatzkörpers auf diesen aufgeschoben, so daß er zumindest den Bereich der Ringnut überdeckt.

Die Übergangszonen von den Seitenwänden der Ringnut zur Außenfläche des Einsatzkörpers sind erfindungsgemäß mit der elastischen Zwischenschicht versehen. Damit wird in besonders zweckmäßiger Weise die Kerbwirkung im gespritzten Kunststoffteil reduziert bzw. vermieden. Die Lebensdauer und Funktionssicherheit wird hierdurch nicht unwesentlich verbessert, da Beschädigungen des Kunststoffteils oder gar ein Abreißen des in die Ringnut eingespritzten Kunststoffringes durch die elastische Zwischenschicht verhindert wird, welche beim Spritzen unter Einwirkung des Spritzdruckes eine Abflachung oder Abrundung von scharfen Kanten des Einsatzkörpers im Bereich der Übergangszonen ergibt. Besondere oder gar aufwendige Bearbeitungsmaßnahmen des Einsatzkörpers zur Verminderung der Kerbwirkung im Kunststoffteil werden mit hoher Funktionssicherheit vermieden.

Der Einsatzkörper oder Gewindeeinsatz kann aus Metall, insbesondere Messing oder Rotguß, ebenso bestehen wie aus Kunststoff, welcher eine unmittelbare dichte Verbindung infolge eines Aufschmelzens oder Verschweißens beim Spritzen des Kunststoffteils nicht oder zumindest nur teilweise eingehen kann. Das Kunststoffteil kann als eine Muffe zum Verbinden mit einem Kunststoffrohr ebenso ausgebildet sein, wie als Bestandteil einer Armatur, eines Behälters oder dergleichen. Für das Kunststoffteil gelangt insbesondere PVC, PVC-C oder ein vergleichbarer Kunststoff zum Einsatz, welcher eine gute Wärmestabilität und eine hohe Festigkeit aufweist. Der Anteil des nachchlorierten PVC oder allgemein des Kunststoffes am Gesamtvolumen des Übergangsstücks ist erheblich größer als der des Gewindeeinsatzes, wodurch Vorteile hinsichtlich Gesamtgewicht und Materialeinsatz erreicht werden. Obgleich die Verwendung von PVC-C für das Kunststoffteil sich heute als besonders zweckmäßig erweist, erfolgt insoweit keine Beschränkung der Erfindung. Es sei an dieser Stelle nur beispielshaft auf Polypropylen, Polyäthylen oder vergleichbare Kunststoffe verwiesen, aus welchen das Kunststoffteil unter Berücksichtigung der jeweiligen Einsatzbedingungen gefertigt werden kann.

In einer besonderen Ausgestaltung enthält der Einsatzkörper Ausnehmungen oder Durchbrechungen, in welche beim Spritzen des Kunststoffteils Kunststoff eindringt, wodurch eine Drehsicherung des Kunststoffteils bezüglich des Einsatzkörpers erreicht ist. Die wenigstens eine Ausnehmung oder Durchbrechung erstreckt sich vorteilhaft im wesentlichen in Richtung der Längsachse des Einsatzkörpers, wodurch nachteilige Kerbwirkungen vor allem beim Auftreten von Umfangsbelastungen zumindest reduziert werden. Die Ausnehmung oder Durchbrechung ist vorteilhaft in einem radialen Ring oder Flansch des Einsatzkörpers angeordnet. Ist die eine Seite des Ringes oder Flansches frei zugänglich, und endet dort die Ausnehmung oder Durchbrechung, so kann in zweckmäßiger Weise überprüft werden, ob der Kunststoff ordnungsgemäß beim Spritzen eingedrungen ist und die Drehsicherung hergestellt ist.

Besondere Ausgestaltungen und Weiterbildungen der Erfindung sind in den Unteransprüchen sowie der Beschreibung eines besonderen Ausführungsbeispiels enthalten.

Die Erfindung wird nachfolgend anhand des in der Zeichnung dargestellten Ausführungsbeispiels näher erläutert. Es zeigen:
- Fig. 1: einen axialen Längsschnitt durch das Übergangsstück,
- Fig. 2: vergrößert das Detail II gemäß Fig. 1.

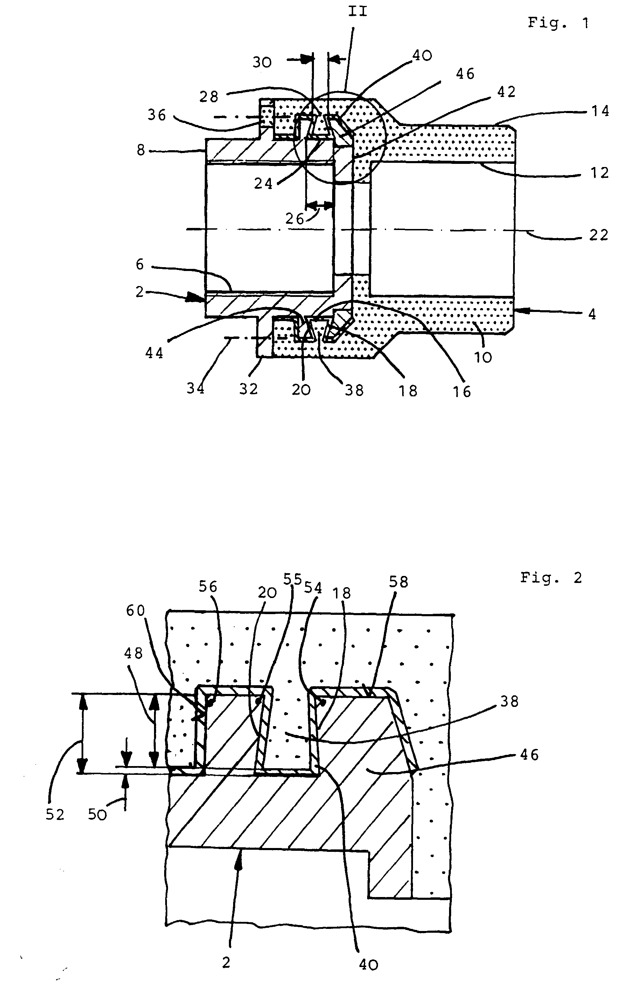

Fig. 1 zeigt in einem axialen Längsschnitt das Übergangsstück mit einem Einsatzkörper 2 und einem Kunststoffteil 4. Der Einsatzkörper 2 enthält ein Innengewinde 6, doch könnte an seinem freien Ende 8 auch ein Außengewinde angeordnet sein. Der Einsatzkörper 2 ist als Gewindeeinsatz ausgebildet und wird nachfolgend auch als solcher bezeichnet. Gleichwohl sei festgehalten, daß der Einsatzkörper 2 im Rahmen der Erfindung auch andere Verbindungsmittel mit einem Rohr aufweisen kann. So kann der Einsatz 2 beispielsweise Elemente einer Bajonett-Verbindung aufweisen, welche mit zugeordneten Elementen des anzuschließenden Rohres in Eingriff bringbar sind. Das Kunststoffteil 4 umgibt teilweise den Gewindeeinsatz 2 und enthält eine Muffe 10, welche in bekannter Weise zur Verbindung mit einem Kunststoffrohr ausgebildet ist. Die Verbindung mit dem Kunststoffrohr kann über der Innenfläche 12 der Muffe ebenso wie über deren Außenfläche 14 bedarfsweise erfolgen.

Der Gewindeeinsatz 2 enthält außen eine Ringnut 16, deren Seitenwände 18, 20 geneigt angeordnet sind. Im Rahmen dieser Erfindung genügt, daß wenigstens eine dieser Seitenwände 18, 20 bezüglich der Längsachse 22 geneigt angeordnet ist. Der Nutboden 24 der Ringnut 16 besitzt eine axiale Breite 26, während die Nutöffnung 28 eine Breite 30 aufweist. Wichtig ist, daß die Breite 26 des Nutbodens 24 größer ist als die Breite 30 der Nutöffnung 28.

In einer alternativen, hier nicht dargestellten, Ausführungsform ist im Gegensatz zu Fig. 1 die Ringnut des Einsatzkörpers nicht radial außen, sondern radial innen liegend angeordnet. Das Kunststoffteil ist bei dieser Ausführungsform entsprechend zumindest teilweise innerhalb des Einsatzkörpers angeordnet und beim Spritzen des Kunststoffteils dringt der Kunststoff in entsprechender Weise in die Ringnut ein, deren Nutöffnung der Längsachse näher liegt als deren Nutboden.

Der Einsatzkörper 2 besitzt einen Flansch 32, an welchem das Kunststoffteil 4 endet. Der Flansch 32 enthält über den Umfang verteilt eine Anzahl von Ausnehmungen 34, welche vorzugsweise als axiale Durchgangsbohrungen ausgebildet sind. Das Kunststoffteil 4 greift mit Ansätzen 36 in diese Ausnehmungen ein. Die Ansätze 36 werden beim Spritzen des Kunststoffteils durch den die Ausnehmungen eindringenden Kunststoff erzeugt. Die angespritzten Ansätze bilden somit die Drehsicherung des Kunststoffteils 4 bezüglich des Einsatzkörpers 2. Nachteilige Kerbwirkungen, welche zu einer Gefährdung der Drehsicherung führen könnten, werden in zweckmäßiger Weise vermieden.

Abweichend von der dargestellten Ausführungsform, gemäß welcher die Ausnehmungen als Längsbohrungen ausgebildet sind, können die Ausnehmungen 34 als radial nach außen sich öffnende Schlitze im Flansch 32 ausgebildet sein. Des weiteren kann die wenigstens eine Ausnehmung auch an anderer Stelle des Einsatzkörpers 2 vorgesehen sein. Unabhängig von der jeweiligen Konfiguration wird durch das Eindringen des Kunststoffs in die Ausnehmung beim Spritzen eine drehfeste Verbindung zwischen dem Kunststoffteil 4 und dem Einsatzkörper 2 gewährleistet.

Zwischen dem Einsatzkörper 2 und dem Kunststoffteil 4 ist erfindungsgemäß eine elastische Zwischenschicht 40 angeordnet, welche aus einem Elastomer, Gummi oder einem vergleichbaren Werkstoff, besteht. Diese Zwischenschicht 40 ist vorzugsweise als ein Schlauch ausgebildet, welcher vor dem Spritzen des Kunststoffteils 4 zumindest im Bereich der Ringnut 16 über den Einsatzkörper 2 geschoben ist. Ferner kann die Zwischenschicht 40 zumindest im Bereich der Ringnut 16 auf den Einsatzkörper 2 aufgespritzt, gewickelt oder auf vergleichbare Art befestigt sein. Zweckmäßigerweise erstreckt sich diese elastische Zwischenschicht 40 im wesentlichen über den gesamten Verbindungsbereich des Kunststoffteils 4 mit dem Einsatzkörper 2, also bei dem hier dargestellten Ausführungsbeispiel vom Flansch 32 axial bis zu dem innerhalb des Kunststoffteils 4 liegenden umspritzten Ende 42 des Einsatzkörpers 2. Die Zwischenschicht ermöglicht in zweckmäßiger Weise einen Ausgleich und eine Aufnahme der Schwindung beim Abkühlen des Kunststoffes nach dem Spritzen mit der Folge, daß das Kunsttoffteil nach dem Abkühlen zumindest näherungsweise frei ist von inneren Spannungen. Ersichtlich wird hierdurch die Belastbarkeit gegenüber äußeren Kräften verbessert. Die Gefahr einer Beschädigung aufgrund von inneren Spannungen des Kunststoffteils wird mittels der elastischen Zwischenschicht erheblich reduziert und ausgeglichen.

Die Ringnut 16 befindet sich zwischen einem Flansch 44 des Einsatzkörpers 2 und einem Haltering 46. Der Flansch 44 ist integraler Bestandteil des Einsatzkörpers 2 oder Gewindeeinsatzes 2, während der Haltering 46 ein zusätzliches Bauteil darstellt, welches insbesondere über eine Preßpassung am inneren Ende 42 des Einsatzes 2 dauerhaft befestigt ist.

Fig. 2 zeigt vergrößtert das Detail II gemäß Fig. 1, wobei aber abweichend der Haltering 46 integraler Bestandteil des Einsatzes 2 ist. Wie ersichtlich, ist die Zwischenschicht 40, welche vorzugsweise als ein Schlauch aus Gummi oder Elastomer besteht, in die Ringnut 16 derart eingedrückt, daß der Nutboden 24 sowie die Seitenwände 18, 20 vollständig von der Zwischenschicht 40 bedeckt sind. Der keilartig ausgebildete Kunststoffring 38 füllt im übrigen die Ringnut vollständig aus. Der Kunststoffring 38 besitzt eine vergleichsweise große radiale Tiefe 48, welche, abgesehen von der vergleichsweise geringen Schichtdicke 50 der Zwischenschicht 40, näherungsweise gleich groß ist wie die Nuttiefe 52 der Ringnut 16. Zweckmäßig ist die radiale Tiefe 48 höchstens um den Faktor 0,5 kleiner als die Nuttiefe 52.

Die elastische Zwischenschicht 40 erstreckt sich erfindungsgemäß über Übergangszonen 54, 55 von den Seitenwänden 18, 20 zur Außenfläche 58 des Einsatzkörpers 2. Die umlaufenden Kanten zwischen den Seitenwänden 18, 20 und der Außenfläche 58 sind von der elastischen Zwischenschicht 14 überdeckt, welche als Trennschicht oder Ausgleichsschicht zwischen den vergleichsweise scharfen Kanten und dem Kunststoffteil dient. Mittels der Zwischenschicht werden effektiv Belastungsspitzen des Kunststoffteils in den Übergangszonen abgebaut und vermieden, so daß Beschädigungen des Kunststoffteils aufgrund einer Kerbwirkung verhindert werden.

Ferner ist in einer Ausgestaltung der Erfindung in der gemäß Fig. 2 linken Übergangszone 56 zwischen einer im wesentlichen radialen Seitenwand 60 und der Außenfläche 58 die elastische Zwischenschicht 40 angeordnet. Axiale Zugkräfte, welche zwischen dem Einsatzkörper 2 und dem Kunststoffteil 4 auftreten, werden zumindest teilweise im Bereich der Seitenwand 60 übertragen, wobei Belastungsspitzen in der ringförmigen Übergangszone 56 zwischen der Außenfläche 58 und der Seitenwand 60 auftreten. Die elastische Zwischenschicht in der Übergangszone bzw. im Bereich der umlaufenden Kante zwischen der Außenfläche 58 und der Seitenwand 60 ergibt eine Reduzierung von Spannungsüberhöhungen und die nachteiligen Folgen einer Kerbwirkung werden praktisch vermieden.

### Bezugszeichen

- 2: Einsatzkörper
- 4: Kunststoffteil
- 6: Innengewinde
- 8: freies Ende von 2
- 10: Muffe
- 12: Innenfläche von 10
- 14: Außenfläche von 10
- 16: Ringnut
- 18, 20: Seitenwand
- 22: Längsachse
- 24: Nutboden
- 26: Breite von 24
- 28: Nutöffnung
- 30: Breite von 28
- 32: Flansch
- 34: Ausnehmung
- 36: Ansatz von 4
- 38: Kunststoffring
- 40: Zwischenschicht / Schlauch
- 42: inneres Ende von 2
- 44: zweiter Flansch von 2
- 46: Haltering
- 48: Tiefe von 38
- 50: Schichtdicke von 40
- 52: Nuttiefe von 16
- 54 - 56: Übergangszone
- 58: Außenfläche
- 60: Seitenwand

## Patentansprüche

1. Übergangsstück für Rohrleitungen, insbesondere für die Verbindung von Kunststoffrohren und Metallrohren, enthaltend ein eingespritztes Kunststoffteil (4) und einen insbesondere ein Gewinde (6) aufweisenden Einsatzkörper (2) mit einer Ringnut (16), von deren Seitenwänden (18, 20) wenigstens eine zur Längsachse (22) geneigt angeordnet ist und in welche ein keilförmiger Kunststoffring (38) des Kunststoffteils (4) teilweise eingreift, wobei zwischen den Seitenwänden (18, 20) und einer Außenfläche (58) des Einsatzkörpers (2) Übergangszonen (54, 55) mit umlaufenden Kanten vorgesehen sind,
dadurch gekennzeichnet, daß zumindest im Bereich der Ringnut (16) und der Übergangszonen (54, 55) eine elastische Zwischenschicht (40) zwischen dem Einsatzkörper (2) und dem Kunststoffteil (4) sowie dem Kunststoffring (38) vorhanden ist.

2. Übergangsstück nach Anspruch 1, dadurch gekennzeichnet, daß die elastische Zwischenschicht (40) sich im wesentlichen über die gesamte axiale Länge des Teiles des Einsatzkörpers (2) erstreckt.

3. Übergangsstück nach Anspruch 1 oder 2, dadurch gekennzeichnet, daß die Zwischenschicht (40) als Schlauch ausgebildet ist und vor dem Spritzen des Kunststoffteils (4) dem Einsatzkörper (2) zugeordnet worden ist.

4. Übergangsstück nach einem der Ansprüche 1 bis 3, dadurch gekennzeichnet, daß der Einsatzkörper (2) zur Drehsicherung wenigstens eine Ausnehmung (34) aufweist, in welche ein Ansatz (36) des Kunststoffteils (4) hineinragt, wobei der Ansatz (36) beim Spritzen des Kunststoffteils (4) in die Ausnehmung (34) mit eingespritzt wurde.

5. Übergangsstück nach Anspruch 4, dadurch gekennzeichnet, daß der Einsatzkörper (2) einen Flansch (32) mit der wenigstens einen Ausnehmung (34) aufweist, wobei zweckmäßig über den Umfang des Flansches (32) verteilt eine Anzahl derartiger Ausnehmungen (34) mit eingreifenden Ansätzen (36) vorhanden ist.

## Claims

1. Transition piece for pipelines, in particular for connecting plastic pipes and metal pipes, containing an injection-moulded plastic part (4) and an insert body (2), in particular one with a thread (6), the insert body having an annular groove (16), of which at least one of the side walls (18, 20) is arranged in an inclined manner with respect to the longitudinal axis (22) and in which a wedge-shaped plastic ring (38) of the plastic part (4) partially engages, transition zones (54, 55) having circumferential edges being provided between the side walls (18, 20) and an outer surface (58) of the insert body (2), characterized in that at least in the region of the annular groove (16) and of the transition zones (54, 55) there is an elastic intermediate layer (40) between the insert body (2) and the plastic part (4) and also the plastic ring (38).

2. Transition piece according to Claim 1, characterized in that the elastic intermediate layer (40) extends substantially over the entire axial length of the part [sic] of the insert body (2).

3. Transition piece according to Claim 1 or 2, characterized in that the intermediate layer (40) is designed as a flexible tube and has been associated with the insert body (2) before the injection moulding of the plastic part (4).

4. Transition piece according to one of Claims 1 to 3, characterized in that the insert body (2) has at least one cutout (34) which serves as a means for locking it against rotation and into which a projection (36) of the plastic part (4) reaches, the projection (36) having been injection-moulded into the cutout (34) during the injection moulding of the plastic part (4).

5. Transition piece according to Claim 4, characterized in that the insert body (2) has a flange (32) having the at least one cutout (34), a number of such cutouts (34) having engaging projections (36) expediently being present in a manner distributed over the periphery of the flange (32).

## Revendications

1. Pièce de raccordement pour canalisations, en particulier pour relier des conduits en plastique et en métal, comprenant une partie (4) en matière plastique injectée et un insert (2) présentant en particulier un filetage (6) avec une rainure annulaire (16), dont au moins l'une des parois latérales (18, 20) est inclinée par rapport à l'axe longitudinal (22) et dans laquelle s'engage partiellement une bague cunéiforme (38) en matière plastique de la partie (4) en matière plastique, des zones de transition (54, 55) à bords périphériques étant prévues entre les parois latérales (18, 20) et une surface extérieure (58) de l'insert (2), ***caractérisée en ce* qu'**au moins au niveau de la rainure annulaire (16) et des zones de transition (54, 55), il est prévu une couche intermédiaire élastique (40) entre l'insert (2) et la partie (4) en matière plastique ainsi que la bague en matière plastique (38).

2. Pièce de raccordement selon la Revendication 1, ***caractérisée en ce que*** la couche intermédiaire élastique (40) s'étend pour l'essentiel sur toute la longueur axiale de la partie de l'insert (2).

3. Pièce de raccordement selon la Revendication 1 ou 2, ***caractérisée en ce que*** la couche intermédiaire (40) est conformée en tuyau et a été associée à l'insert (2) avant l'injection de la partie (4) en matière plastique.

4. Pièce de raccordement selon l'une quelconque des Revendications 1 à 3, ***caractérisée en ce que*** l'insert (2) présente pour son immobilisation en rotation au moins un creux (34), dans lequel s'enfonce un ergot (36) de la partie (4) en matière plastique, l'ergot (36) ayant été formé par injection dans le creux (34) lors de l'injection de la partie (4) en matière plastique.

5. Pièce de raccordement selon la Revendication 4, ***caractérisée en ce que*** l'insert (2) présente une bride (32) avec au moins un creux (34), plusieurs évidements (34) de ce type avec des ergots (36) en prise étant de préférence prévus, répartis sur la circonférence de la bride (32).
